# FASCICULE DE BREVET EUROPEEN

(11) **EP 3 836 785 B1**
(45) Date de publication et mention de la délivrance du brevet: **05.10.2022**
(21) Numéro de dépôt: 19752710.4
(22) Date de dépôt: 14.08.2019
(51) Int. Cl.: A01N 1/02, F25D 3/10, F25D 29/00

(54) **DISPOSITIF DE CRYOGÉNISATION À COMMANDE HYDRAULIQUE**
KRYOGENE VORRICHTUNG MIT EINER HYDRAULISCHEN STEUERUNG
CRYOGENIC DEVICE WITH A HYDRAULIC CONTROL

(30) Priorité: 14.08.2018 FR 1857488
(43) Date de publication de la demande: 23.06.2021
(73) Titulaire: CRYOCAPCELL, 75015 Paris (FR)
(72) Inventeur: HEILIGENSTEIN, Jérôme, 75015 Paris (FR); HEILIGENSTEIN, Xavier, 92220 Bagneux (FR)
(74) Mandataire: Icosa
(86) Numéro de dépôt international: PCT/EP2019/071787
(87) Numéro de publication internationale: WO 2020/035522

(56) Documents cités:
- WO-A1-2010/057589
- WO-A2-01/95716
- CN-A- 101 797 179

## Description

La présente invention concerne le domaine des dispositifs pour cryogéniser ou vitrifier des solutions ou des composants. L'invention concerne plus particulièrement les dispositifs de cryogénisation comportant un circuit hydraulique d'entraînement d'un piston.

### ÉTAT DE LA TECHNIQUE

Il existe des dispositifs permettant de cryogéniser un élément, tel qu'une solution ou un composant, à partir de systèmes configurés pour apporter un volume d'azote liquide N₂, dans des conditions de pression et de température appropriées, au sein d'une cavité dans laquelle est positionné l'élément à cryogéniser.

Les solutions actuelles utilisent le plus souvent un système comportant une partie amovible de type piston dans un vérin dont le mouvement est engagé par la détente d'un gaz de type air comprimé. Ce type de solution permet de générer des vitesses de déplacement importantes d'un volume d'azote liquide N₂ dans l'enceinte comportant l'élément à cryogéniser. Toutefois, ce type de solution présente des inconvénients majeurs, en particulier en ce qui concerne la détente de gaz, notamment élastique, qui est non maîtrisée en température et pression. Par ailleurs, la détente de gaz n'assure pas non plus la maîtrise d'une vitesse résultante du piston. Ainsi, il est possible d'obtenir des vitesses de cryogénisation importantes, mais les conditions de la cryogénisation ne peuvent être maîtrisées convenablement sauf à définir un système complexe.

Il existe un besoin d'utiliser un système permettant de réduire les durées de cryogénisation et d'augmenter la maîtrise des conditions de cryogénisation en température et pression, tout en maîtrisant la vitesse de déplacement.

Parmi les solutions permettant le déplacement d'un piston dans un vérin, des systèmes hydrauliques existent, notamment dans le secteur automobile ou aéronautique. Toutefois, dans l'objectif d'obtenir un déplacement rapide du piston, par exemple pour cryogéniser un élément, l'homme de l'art aurait un préjugé le dissuadant d'envisager cette solution du fait de la viscosité des huiles hydrauliques généralement utilisées.

En conséquence, l'homme de l'art tenterait d'obtenir des solutions dans lesquelles un gaz peut être détendu avec plus d'énergie, tout en renforçant les dispositifs de contrôle et de régulation du déplacement du volume du gaz.

Le document CN101797179A divulgue un dispositif de cryogénisation ou de vitrification qui comprend: un accumulateur comportant un premier volume pneumatique sous pression; un système de commande pilotant une vanne apte à libérer un deuxième volume pneumatique de l'accumulateur vers un vérin au moyen d'une conduite; un vérin comportant un piston configuré pour être entraîné par le deuxième volume pneumatique et entraîner un premier volume de fluide cryogénisant dans une enceinte de cryogénisation destinée à recevoir un échantillon à cryogéniser. Les documents WO01/95716A2 et WO2010/057589A1 divulguent aussi des dispositifs de cryogénisation ou de vitrification destinés à cryogéniser un échantillon.

### RÉSUMÉ

L'invention selon la revendication 1 divulgue un dispositif de cryogénisation ou de vitrification, comprenant :
- un accumulateur comportant un premier volume d'huile hydraulique sous pression ;
- un système de commande pilotant une vanne apte à libérer un deuxième volume d'huile hydraulique de l'accumulateur vers un vérin au moyen d'une conduite ;
- un vérin comportant un piston configuré pour être entraîné par le deuxième volume d'huile hydraulique et entraîner un premier volume de fluide cryogénisant dans une enceinte de cryogénisation destinée à recevoir un échantillon à cryogéniser.

Un tel agencement permet de déplacer un volume d'huile hydraulique, dont la vitesse et la pression peuvent être contrôlées, pour activer un piston dans l'objectif de cryogéniser un échantillon.

Selon un mode de réalisation, l'huile hydraulique est une huile minérale ISO VG 46, i.e. ayant une viscosité cinématique moyenne à 40°C comprise entre environ 40 mm²/s et 50 mm²/s.

Dans le cadre de l'invention, le fluide cryogénisant est notamment de l'azote liquide N₂, c'est-à-dire du gaz diazote refroidi en dessous de son point d'ébullition.

Selon un mode de réalisation, l'accumulateur comprend un premier volume d'huile hydraulique sous une pression supérieure ou égale à 200 bars, ladite pression étant transmise au piston de sorte à générer une pression de sortie sur le premier volume de fluide cryogénisant supérieure ou égale à 1800 bars dans une durée inférieure ou égale à 5 ms.

Selon un mode de réalisation, l'accumulateur comprend un premier volume d'huile hydraulique sous une pression supérieure ou égale à 200 bars, ladite pression étant transmise au piston de sorte à générer une pression de sortie sur le premier volume de fluide cryogénisant supérieure ou égale à 2000 bars dans une durée inférieure ou égale à 2 ms.

Selon un mode de réalisation, l'accumulateur comporte une chambre dont le volume est déformable et dans laquelle un volume de gaz compressible assure une pression prédéfinie sur le premier volume d'huile hydraulique de l'accumulateur. Il est ainsi possible d'exercer une pression constante sur le volume d'huile hydraulique dans l'accumulateur.

Selon un mode de réalisation, le piston a une géométrie assurant un rapport de pressions entre son entrée et sa sortie supérieur ou égal à 6. Il est ainsi possible d'atteindre une pression suffisante en sortie du piston, notamment une pression supérieure ou égale à 1800 bars, de manière à activer un phénomène physique de cryogénisation d'un échantillon obtenu par exemple avec l'azote liquide N₂.

Selon un mode de réalisation, le dispositif comprend un bloc de distribution, ledit bloc de distribution acheminant le premier volume d'huile hydraulique sous pression vers le vérin, ledit bloc de distribution comportant un premier distributeur permettant d'activer une vanne de tir selon une première pression donnée lorsqu'une cryogénisation est activée. Un avantage d'un tel agencement est d'amener le volume d'huile hydraulique sous pression au plus proche de l'entrée du vérin. En particulier, le premier distributeur permet d'acheminer le volume d'huile hydraulique sous pression à une distance de quelques centimètres de l'entrée du vérin.

Selon un mode de réalisation, le bloc de distribution comporte un deuxième distributeur piloté pour prélever un deuxième volume de fluide cryogénisant, le système de commande pilotant le deuxième distributeur pour actionner le piston selon un régime permettant de pomper ledit deuxième volume de fluide cryogénisant. Ainsi, le bloc de distribution est apte à assurer deux fonctions : d'une part, un pompage de fluide cryogénisant jusqu'à atteindre un volume donné de fluide cryogénisant et, d'autre part, un tir pour envoyer à haute vitesse et haute pression le volume donné de fluide cryogénisant vers une enceinte de cryogénisation. Le bloc de distribution permet alors d'ajuster le volume donné de fluide cryogénisant, notamment d'azote liquide N₂.

Selon un mode de réalisation, le piston comporte un élément extrémal configuré pour prélever un volume de fluide cryogénisant dans une chambre intermédiaire. Le piston est ainsi conçu pour permettre soit d'éjecter un volume de fluide cryogénisant pour la cryogénisation, soit de prélever un volume de fluide cryogénisant pour préparer une quantité à éjecter ultérieurement.

Selon un mode de réalisation, un réservoir de fluide cryogénisant assure le maintien du volume de fluide cryogénisant dans une chambre intermédiaire. Un avantage est d'obtenir des pièces du dispositif facilement interchangeables et permettant une maintenance facilitée.

Selon un mode de réalisation, le deuxième distributeur coordonne l'échappement d'un volume d'huile hydraulique provenant du vérin consécutivement à une cryogénisation de l'échantillon. Il est ainsi possible d'obtenir un retour à l'état initial du piston grâce au deuxième distributeur, sans besoin de niveaux élevés de pression pour repositionner le piston.

Selon un mode de réalisation, l'interface de sortie de l'accumulateur acheminant un volume d'huile hydraulique sous pression est alignée avec l'interface d'entrée du bloc de distribution, lesdites interfaces étant reliées par une conduite dont la longueur est inférieure ou égale à 60 cm. Un tel agencement a l'avantage de limiter les effets de la viscosité et de préserver la cinétique lors du déplacement du volume d'huile hydraulique dans la conduite.

Selon un mode de réalisation, l'interface de sortie du bloc de distribution acheminant un volume d'huile hydraulique sous pression est alignée avec l'interface d'entrée du vérin, lesdites interfaces étant reliées par une conduite dont la longueur est inférieure ou égale à 60 cm. Ici encore, un tel agencement a l'avantage de limiter les effets de la viscosité et de préserver la cinétique lors du déplacement du volume d'huile hydraulique dans la conduite.

Selon un mode de réalisation, l'enceinte de cryogénisation comporte un volume d'éthanol. Un tel volume d'éthanol forme un coussin hydraulique permettant de protéger l'échantillon de la cinétique du fluide cryogénisant utilisé pour cryogéniser.

Selon un mode de réalisation, l'enceinte de cryogénisation comporte une ouverture d'évacuation pour l'échappement, notamment du fluide de cryogénisation. Il est ainsi possible de réaliser rapidement un nouveau tir de cryogénisation.

### BRÈVE DESCRIPTION DES FIGURES

La **figure 1** est un schéma de principe du fonctionnement d'un dispositif de cryogénisation selon un mode de réalisation de l'invention.
La **figure 2** est une vue en perspective d'un dispositif de cryogénisation selon un mode de réalisation de l'invention.
La **figure 3** est une vue schématique d'un vérin d'un dispositif de cryogénisation selon un mode de réalisation de l'invention, dont le piston est en communication avec une chambre contenant de l'azote liquide N₂ en tant que fluide cryogénisant.
La **figure 4** est une vue en perspective d'un vérin d'un dispositif de cryogénisation selon un mode de réalisation de l'invention.

### DESCRIPTION DÉTAILLÉE

Toutes les caractéristiques de la revendication 1 sont des caractéristiques obligatoires pour tous les modes de réalisation de l'invention.

La description suivante sera mieux comprise à la lecture des dessins. Dans le but d'illustrer, le dispositif est représenté dans des modes de réalisation préférés. Il doit être compris, cependant, que la présente demande n'est pas limitée aux arrangements, structures, caractéristiques, modes de réalisation et apparence précis indiqués. Les dessins ne sont pas dessinés à l'échelle et ne sont pas destinés à limiter la portée des revendications aux modes de réalisation représentés dans ces dessins. Par conséquent, il doit être compris que lorsque des caractéristiques mentionnées dans les revendications sont suivies par des références, lesdites références sont inclues uniquement en vue d'améliorer la compréhension des revendications et ne limitent en aucun cas la portée de ces revendications.

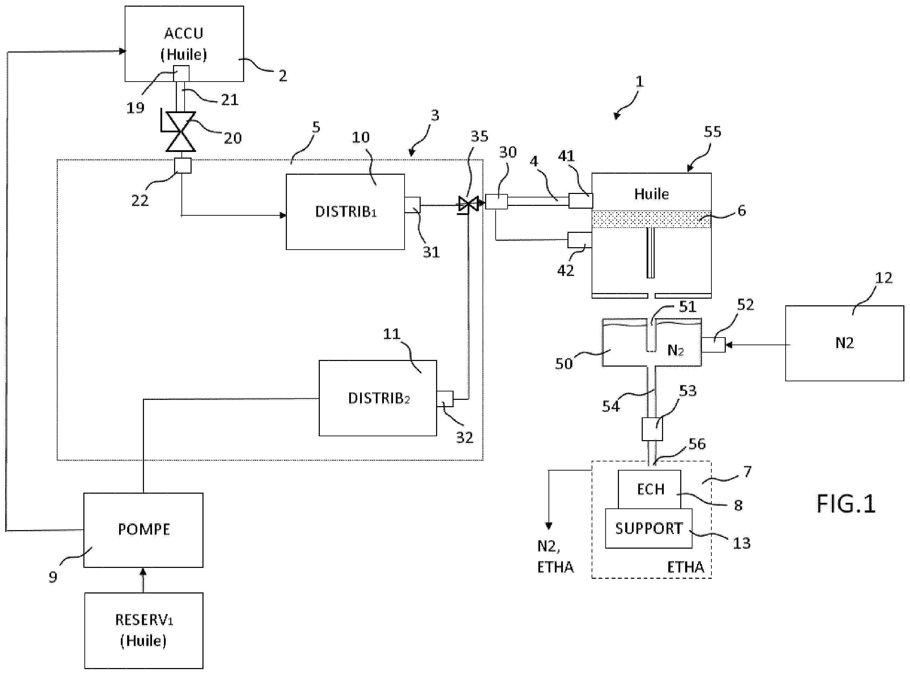

La figure 1 est un schéma permettant d'illustrer le fonctionnement d'un mode de réalisation de l'invention. Le dispositif de cryogénisation est noté 1.

### Accumulateur

Un accumulateur 2 comporte un volume d'huile hydraulique sous pression, par exemple entre 250 et 450 bars. Selon un exemple, la pression de l'huile hydraulique dans l'accumulateur 2 est comprise entre 300 et 400 bars. Selon un mode de réalisation, l'accumulateur 2 est un accumulateur à piston. Selon un mode de réalisation, l'accumulateur 2 comprend une entrée permettant de réacheminer un volume d'huile hydraulique du dispositif 1 qui a été utilisé et qui sera réutilisé pour une cryogénisation. Selon un mode de réalisation, l'accumulateur 2 comporte une chambre dont le volume est déformable (non représentée sur les figures), comportant de l'azote liquide N₂ sous pression permettant de maintenir un volume d'huile hydraulique sous une pression sensiblement constante. Selon un mode de réalisation, l'accumulateur 2 peut alors être alimenté en huile hydraulique par une pompe externe 9, afin d'être toujours alimenté. Selon un mode de réalisation, la pompe 9 permettant de maintenir un niveau d'huile hydraulique sous pression dans l'accumulateur peut être une pompe assurant également l'alimentation en huile hydraulique d'autres équipements du dispositif 1. L'accumulateur 2 comporte une sortie 19 pour délivrer un volume d'huile hydraulique V_{1H} à un bloc de distribution 3 qui comprend, selon un mode de réalisation, différents distributeurs 10, 11. Un canal ou conduite 21 est avantageusement agencé entre l'accumulateur 2 et le bloc de distribution 3.

### Bloc de distribution

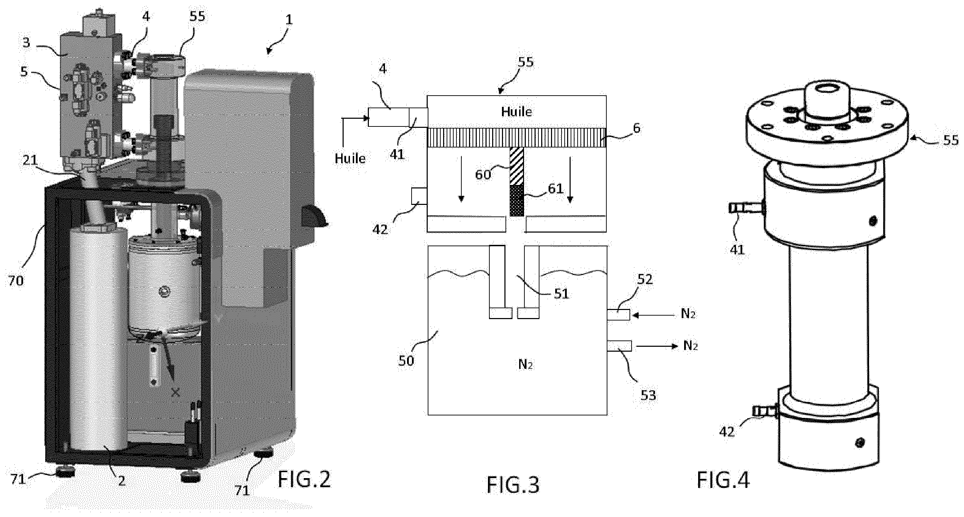

Dans le mode de réalisation montré sur la figure 2, le bloc de distribution 3 comprend un bloc foré 5. Ce dernier peut, par exemple, être réalisé en fonte ou en acier. Selon un exemple, le bloc foré 5 forme un bloc compact et massif. Le bloc foré 5 comporte des logements et ouvertures destinés à recevoir des éléments hydrauliques, tels que des vannes, des clapets, des raccords, des conduites, des coudes, des régulateurs, des contrôleurs, des positionneurs, des robinets, des soupapes, etc. Le bloc de distribution 3 comprend ainsi le bloc foré 5 et les différents éléments hydrauliques qui sont agencés dans le bloc foré 5.

Selon un exemple de réalisation, le bloc de distribution 3 comporte deux distributeurs 10, 11.

Un premier distributeur 10 permet un premier mode de fonctionnement du bloc de distribution 3 pour réaliser une action de cryogénisation. Dans ce mode de réalisation, le distributeur 10 est alimenté par l'accumulateur 2. A cet effet, comme montré sur la figure 1, le bloc de distribution 3 comporte une entrée 22 pour recevoir l'huile hydraulique provenant d'une vanne d'entrée 20 acheminant l'huile de l'accumulateur 2.

Un deuxième distributeur 11 permet un deuxième mode de fonctionnement du bloc de distribution 3 pour réaliser un pompage d'un volume d'azote liquide N₂ nécessaire pour une étape ultérieure de cryogénisation.

Notamment, leur coordination permet d'assurer l'introduction et l'évacuation de volumes d'huile hydraulique sous pression dans un vérin 55 afin de séquencer les étapes de pompage d'un volume d'azote liquide N₂ et de cryogénisation d'un échantillon 8. A cet effet, le vérin 55 comporte une entrée 41 pour recevoir un volume d'huile hydraulique provenant du bloc de distribution 3.

Une vanne 20 est pilotée à partir d'un module de commande (non représenté). Son ouverture et sa fermeture peuvent, par exemple, être commandées à partir d'une consigne mécanique et/ou électrique générée automatiquement selon une programmation du système hydraulique ou manuellement à partir d'une interface de commande destinée à un utilisateur.

Le circuit hydraulique peut être utilisé de deux manières différentes. La première manière comprend l'extraction d'un volume d'huile hydraulique de l'accumulateur 2 à haute pression, par exemple 350 bars, pour cryogéniser un élément en utilisant l'azote liquide N₂ en tant que fluide cryogénisant, ce qui correspond au premier mode de fonctionnement, dit de « cryogénisation ». La deuxième manière comprend l'extraction d'un volume d'huile d'une réserve d'huile hydraulique à partir d'une pompe 9 à une pression inférieure ou égale à 350 bars, par exemple de l'ordre de 50 bars, pour pomper un volume donné d'azote liquide N₂ en tant que fluide cryogénisant, ce qui correspond au deuxième mode de fonctionnement, dit de « pompage ». Selon un mode de réalisation, la pompe 9 alimentant l'accumulateur 2 peut être configurée pour alimenter également le distributeur 11. La pompe 9 est avantageusement connectée à une réserve d'huile hydraulique RESERV₁.

### Premier et deuxième modes de fonctionnement : cryogénisation et pompage

L'un ou l'autre des deux modes de fonctionnement que sont la cryogénisation et le pompage peuvent être commandés à partir d'une interface de commande. Une consigne permet d'activer le circuit hydraulique dans l'un ou l'autre des deux modes de fonctionnement.

A titre d'exemple, les deux modes de fonctionnement peuvent être utilisés successivement, par exemple lorsqu'un volume donné d'azote liquide N₂ est d'abord pompé, pour être ensuite utilisé dans une opération de cryogénisation. Un avantage de l'utilisation du mode de pompage est de maîtriser parfaitement la quantité d'azote N₂ injectée et sa pression. Par ailleurs, les poches d'air, le cas échéant, sont éliminées.

Selon un mode de réalisation, le dispositif 1 de l'invention comprend un premier distributeur 10 pilotant le circuit hydraulique pour acheminer un volume d'huile hydraulique sous pression au sein du vérin 55. A cet effet, un premier circuit de distribution, formant un sous-ensemble du circuit hydraulique, permet de réaliser des fonctions de contrôle du circuit hydraulique : accélération ou ralentissement des ouvertures de vanne, commandes des retours anti-clapet, commande des robinets, gestion des mouvements de montée et descente de la pompe, purge et évacuation des volumes d'huile hydraulique et d'azote liquide N₂ consommés, mesure de contrôle de pression en différents points du circuit hydraulique.

Lorsque la fonction de pompage est actionnée selon le deuxième mode de fonctionnement, le circuit hydraulique extrait un volume d'huile hydraulique d'une réserve RESERV₁ à partir d'une pompe 9 à une pression plus faible que la pression nécessaire pour générer un déplacement du piston 6 pour la cryogénisation. Les déplacements du piston 6 sont alors réalisés à une vitesse permettant d'extraire une quantité d'azote liquide N₂ d'une réserve 50. Le pompage est réalisé grâce à un mouvement de montée et de descente du piston 6. La quantité extraite d'azote N₂ est calculée pour un élément donné à cryogéniser ou à vitrifier.

Enfin, une fois que la quantité d'azote liquide N₂ collectée est suffisante, l'opération de cryogénisation peut être engagée par activation du premier distributeur 10 alimenté par l'accumulateur 2.

### Troisième mode de fonctionnement : retour de piston

Un troisième mode de fonctionnement du distributeur 10 correspond au régime de pression après la réalisation d'un tir pour cryogéniser. Le distributeur 11 permet de générer une pression entraînant le piston 6 jusqu'à sa position d'origine, prêt pour un nouveau tir. Selon un mode de réalisation, le dispositif 1 de l'invention comporte une pluralité de points de mesure de la pression, par exemple réalisés par des manomètres. Les manomètres peuvent être agencés en différents endroits : en sortie de l'accumulateur 2, en sortie de la pompe 9, en entrée et en sortie du distributeur 10, en entrée et en sortie du distributeur 11. Les points de contrôle permettent d'asservir les commandes de pilotage en fonction d'une consigne à atteindre. Des régulateurs de pression ou des assistances d'ouverture et de fermeture de vannes peuvent être mis en œuvre afin de faciliter la transmission du volume d'huile hydraulique vers le piston 6 du vérin 55.

Selon un mode de réalisation, un assistant hydraulique du mouvement d'ouverture de la vanne de tir 35 peut être agencé de telle sorte que l'ouverture des vannes puisse ne pas défavoriser le gradient de pression d'huile hydraulique injecté vers le piston 6.

Selon un mode de réalisation, le circuit hydraulique acheminant le volume d'huile hydraulique sous pression est introduit dans le vérin 55 au contact du piston 6. Une entrée 41 permet d'introduire le volume d'huile hydraulique dans le vérin 55 après son passage dans la conduite 4. Un avantage du dispositif 1 de l'invention est de réduire au maximum la distance entre la sortie du bloc de distribution 3 et l'entrée du vérin 55. Selon un mode de réalisation, le circuit hydraulique entre la sortie de l'accumulateur 2 et celle du distributeur 10 permet de maintenir et de contrôler la pression de l'huile hydraulique. Le distributeur 10 comprend une vanne de tir 35 qui, dans le premier mode de fonctionnement dit de « cryogénisation », est coordonnée avec l'ouverture de la vanne 20 de l'accumulateur 2 de manière à ce que son ouverture libère un volume d'huile hydraulique sous une pression sensiblement égale à la pression de sortie de l'accumulateur 2.

### Conduites

Afin de réduire les effets de viscosité entre l'accumulateur 2 et le bloc de distribution 3, une première conduite 21 est agencée entre les deux éléments 2 et 3. La longueur de la première conduite 21 est réduite au maximum par un agencement de la sortie de l'accumulateur 2 directement en vis-à-vis de l'entrée d'une vanne d'entrée 20 du bloc de distribution 3. Préférentiellement, la vanne 20 est incluse dans le bloc de distribution 3. Selon un agencement préféré, l'accumulateur 2 est agencé sous le bloc de distribution 3 de sorte à ce que la première conduite 21 soit positionnée verticalement. Cet agencement permet d'obtenir un encombrement minimal et une longueur de la conduite 21 comprise entre 6 cm et 60 cm. Le diamètre de la première conduite 21 est déterminé de sorte à ce que les effets de viscosité soient réduits lors du déplacement de l'huile hydraulique. Le diamètre est supérieur ou égal à 2 cm, préférentiellement supérieur ou égal à 4 cm. Selon un mode de réalisation, le diamètre de la première conduite 21 est compris entre 5 et 10 cm. Selon un mode de réalisation, l'accumulateur 2 est agencé au-dessus du bloc de distribution 3 dans une même configuration permettant d'orienter la première conduite 21 verticalement.

Afin de réduire la distance entre la sortie du bloc de distribution 3 et l'entrée dans le vérin 55, une deuxième conduite 4 est agencée entre le vérin 55 et le bloc de distribution 3. Selon un mode de réalisation, la deuxième conduite 4 est sensiblement droite. Selon un mode de réalisation, la deuxième conduite 4 est orientée horizontalement afin de contrôler les effets d'écoulement turbulent, de gravité et de viscosité. Enfin, cette disposition permet de réduire l'encombrement de la machine. Selon un mode de réalisation, la longueur de la conduite 4 est comprise entre 10 et 50 cm. Selon un exemple de réalisation, la longueur de la deuxième conduite 4 est comprise entre 8 cm et 20 cm. Selon un mode de réalisation, la longueur de la deuxième conduite 4 est comprise entre 20 et 40 cm. Selon un exemple, la longueur de la deuxième conduite 4 est comprise entre 25 et 30 cm. Le diamètre de la deuxième conduite 4 est suffisamment grand pour éviter des effets de viscosité, le diamètre est supérieur ou égal à 2 cm, préférentiellement supérieur ou égal à 5 cm. Selon un mode de réalisation, le diamètre de la deuxième conduite 4 est compris entre 6 et 10 cm.

Selon divers exemples, les conduites 4 et 21 peuvent être réalisées dans différents matériaux et peuvent comprendre différentes épaisseurs. La tenue mécanique doit être dimensionnée pour supporter une pression de 350 à 400 bars minimum. Selon un mode de réalisation, les conduites ont une épaisseur de 1 à 6 mm et sont, par exemple, réalisées en métal. Selon un exemple, les conduites 4, 21 sont des tubes ou des tuyaux métalliques tressés pour accueillir l'huile hydraulique.

### Piston

L'huile hydraulique injectée dans le vérin 55 entraîne le déplacement du piston 6.

Selon un mode de réalisation, le piston 6 comporte une surface d'entrée destinée à être au contact de l'huile hydraulique allant de 7 à 20 fois la surface de sortie du piston 6 destinée à éjecter un volume de gaz, par exemple l'azote liquide N₂, utilisé pour cryogéniser. Selon un mode de réalisation, le rapport de surface est compris entre 10 et 16. Selon un mode de réalisation, le rapport est compris entre 5 et 10. Dans l'exemple où l'huile hydraulique est à une pression de 350 bars, la pression de l'azote liquide N₂ en sortie du piston 6 afin de cryogéniser l'élément peut avantageusement être de l'ordre de 2300 bars. Le rapport de surfaces d'entrée et de sortie est préférentiellement supérieur ou égal à 6,5.

Le piston 6 est donc dimensionné afin de répondre au premier mode de fonctionnement, à savoir injecter un volume d'azote liquide N₂ dans une enceinte 7. Selon différents modes de réalisation, le piston 6 peut effectuer différentes courses afin d'ajuster une pression d'azote liquide N₂ dans l'enceinte 7. Selon un mode de réalisation, la course du piston 6 peut être comprise entre 160 mm et 240 mm. Selon un exemple, la course est de 200 mm.

En appliquant une pression moindre à la surface du piston 6, ce dernier peut se mouvoir de manière à pomper un volume d'azote liquide N₂ dans un réservoir 50 formant une chambre intermédiaire pour extraire une quantité prédéfinie. L'intérêt d'une telle chambre intermédiaire 50 est qu'elle forme à la fois un réservoir dans lequel le piston 6 est apte à effectuer un pompage d'un volume d'azote liquide N₂ et un canal permettant de transférer la pression de sortie de l'azote liquide N₂ pour réaliser la cryogénisation par la génération d'un volume de fluide à envoyer au sein de l'enceinte de cryogénisation. Une quantité prédéfinie est prélevée en plusieurs mouvements de piston 6, permettant d'atteindre le niveau souhaité d'azote liquide N₂ pour la cryogénisation. Puis, selon le premier mode de fonctionnement, le piston 6 entraîne, à une forte pression, le déplacement d'un volume d'azote liquide N₂ vers une enceinte 7 dans laquelle l'échantillon à cryogéniser est maintenu.

Dans le mode de réalisation montré sur la figure 3, le piston 6 comprend un embout 61 en sortie permettant d'agir comme une seringue ou une pipette afin de remplir la fonction de pompage. La seringue pénètre alors dans le réservoir intermédiaire 50 et extrait un volume d'azote liquide N₂. Un canal 51 adapté pour recevoir l'embout du piston 6 peut être agencé de manière à déboucher dans le réservoir intermédiaire 50. Le mouvement d'aller et retour de l'embout 61 permet de réaliser une fonction de pompage d'un volume d'azote liquide N₂. Selon un mode de réalisation, la fonction de pompage pour assurer les mouvements d'aller et retour du piston 6 peut être assurée par le distributeur 11 ainsi que des vannes et/ou clapets pilotés par un calculateur, par exemple du système de commande. Afin d'activer ce deuxième mode de fonctionnement, c'est-à-dire le pompage, le distributeur 11 est piloté de manière à injecter un volume d'huile hydraulique par le canal formant la conduite 4 et à extraire un volume d'huile hydraulique par une interface de sortie 42 du vérin 55. L'extraction du volume d'huile hydraulique par la sortie 42 est réalisée consécutivement à l'injection afin de repositionner le piston 6 dans sa position initiale.

La conduite 4 permettant le transfert d'un volume d'huile hydraulique sous pression du distributeur 10 du bloc de distribution 3 vers le vérin 55 comprend une extrémité distale s'interfaçant avantageusement avec une interface d'entrée 41 du vérin 55.

Afin d'équilibrer les niveaux de pression et de maintenir le niveau d'azote liquide N₂ pompé, une réserve 12 d'azote liquide N₂ est utilisée pour injecter un niveau d'azote liquide N₂ dans le réservoir 50. Une entrée 52 associée, par exemple, à un clapet ou une vanne peut être mise en œuvre pour assurer l'atteinte d'un niveau donné d'azote liquide N₂. L'entrée 52 forme alors une interface avec le réservoir intermédiaire 50.

Selon un mode de réalisation, l'échantillon 8 à cryogéniser est agencé dans une enceinte 7. Selon un mode de réalisation, l'enceinte 7 permet de laisser passer l'azote liquide N₂ tout en protégeant l'échantillon 8 de la cinématique du gaz injecté. Selon un mode de réalisation, l'enceinte 7 correspond à une chambre comportant une ouverture 56 disposée dans le prolongement d'une conduite de sortie 54 du réservoir intermédiaire 50.

Selon un mode de réalisation, le réservoir intermédiaire 50 comporte un clapet 53 configuré pour évacuer le volume d'azote liquide N₂ vers l'enceinte 7 lorsqu'un seuil donné de pression est dépassé. Ainsi, lorsque le premier mode de fonctionnement est activé, la vanne de tir 35 entraîne un déplacement du piston 6 permettant de mettre sous pression une quantité d'azote N₂ à injecter dans l'enceinte 7. La pression étant supérieure au seuil donné, le clapet 53 s'ouvre et il libère la quantité d'azote N₂ suffisante pour cryogéniser l'échantillon 8.

Selon le deuxième mode fonctionnement, correspondant au pompage d'un volume d'azote liquide N₂, le déplacement du piston 6 est suffisamment lent pour que la pression d'azote N₂ soit inférieure au seuil donné. Dans ces conditions, le clapet 53 reste fermé et ne libère pas d'azote N₂ dans l'enceinte 7. Ainsi, le clapet 53 est configuré de sorte à permettre ou non une libération d'un volume d'azote liquide N₂ dans l'enceinte 7. Un avantage est de mutualiser des composants pour assurer le fonctionnement à la fois du premier et du deuxième mode de fonctionnement.

Selon un mode de réalisation, un volume d'éthanol ETHA est inséré dans l'enceinte 7 de manière à favoriser l'action de l'azote N₂ sur l'échantillon 8. La présence d'un volume d'éthanol permet de former un « coussin » hydraulique lors de l'injection de l'azote N₂ et ainsi de protéger l'échantillon 8.

Selon un mode de réalisation, l'échantillon 8 est avantageusement disposé sur une surface d'un support 13 amovible qui peut être inséré dans l'enceinte 7 et extrait de l'enceinte 7 facilement. Après l'opération de cryogénisation, une sortie de l'enceinte 7 permet d'évacuer les volumes d'azote liquide N₂ et d'éthanol ETHA introduits et/ou confinés dans cette dernière.

La figure 2 montre un exemple d'agencement compact du dispositif 1 de l'invention. Dans cet exemple d'agencement, l'accumulateur 2 est disposé sous le bloc de distribution 3. Autrement dit, l'accumulateur 2 et le bloc de distribution 3 sont agencés dans un même alignement selon l'axe de leur plus grande dimension. Un avantage est de raccourcir au maximum la longueur de la conduite 21.

Selon un mode de réalisation, la vanne 20 est agencée entre la conduite 21 et l'accumulateur 2. Selon un autre mode de réalisation, la vanne 20 est agencée entre la conduite 21 et le bloc de distribution 3.

Selon un mode de réalisation, tel que montré à titre d'exemple sur la figure 2, le dispositif 1 de l'invention comprend des piètements 71. En outre, selon un mode de réalisation, le dispositif 1 comprend un bâti 70 assurant le maintien des différents éléments du dispositif 1 selon un agencement déterminé. Un avantage est de permettre le déplacement du dispositif 1 d'un bloc, sans avoir à démonter les différents éléments séparément pour l'installer à un endroit donné. Un autre avantage du bâti 70 est d'agencer avec précision le vérin 55 en alignement avec un réservoir d'azote liquide N₂ ou un réservoir d'évacuation des gaz après une cryogénisation. Le bâti 70 permet de supporter le bloc foré 5 au moyen d'une surface plane formant un support permettant notamment d'absorber certains chocs.

La figure 4 est une vue en perspective d'un mode de réalisation de vérin 55. Sur la figure 4 sont représentées les interfaces d'entrée 41 et de sortie 42 de l'huile hydraulique utilisées pour déplacer le piston au sein du vérin 55. Les interfaces d'entrée 41 et de sortie 42 permettent de raccorder le vérin 55 au bloc de distribution 3. Avantageusement, le bloc de distribution 3 est agencé de manière à permettre un alignement de son interface de sortie 30 avec l'interface d'entrée 41 du vérin 55. La sortie 30 du bloc de distribution 3 est avantageusement alignée avec la sortie 31 du distributeur 10 et donc avec l'entrée 41 du vérin 55. La conduite 4 est alors avantageusement disposée entre l'entrée 41 du vérin 55 et la sortie 30 du bloc de distribution 3.

Selon un exemple, la sortie 32 du deuxième distributeur 11 est alignée avec la sortie 42 du vérin 55 (configuration non représentée). Selon un autre exemple, la sortie 32 du deuxième distributeur 11 n'est pas alignée avec la sortie 42 du vérin 55. Dans le deuxième mode de fonctionnement, c'est à dire le fonctionnement de pompage, les acheminements des fluides du bloc de distribution 3 vers le vérin 55 ou réciproquement peuvent être réalisés dans des conduites supportant moins de contraintes physiques que dans la configuration du premier mode de fonctionnement, correspondant à un tir pour cryogénisation. En effet, les pressions des fluides déplacés dans le deuxième mode de fonctionnement sont inférieures aux pressions des fluides déplacés dans le premier mode de fonctionnement.

Ainsi, cette configuration permet un alignement de la sortie 31 du distributeur 10 du bloc de distribution 3 avec l'entrée 41 du vérin 55 au moyen de la conduite 4. Cet agencement permet d'obtenir un déplacement des fluides injectés à haute vitesse et haute pression tout en préservant au mieux la cinématique et la dynamique des fluides entre les entrées/ sorties 31 et 41. Ainsi, la pression du fluide en sortie du distributeur 10 se retrouve sensiblement conservée à l'entrée du piston 6.

Selon un mode de réalisation, le vérin 55 peut comprendre, par exemple, une chambre cylindrique. Le piston 6 est une pièce mobile évoluant entre une première position et une deuxième position. Les positions du piston 6 sont atteintes grâce aux pressions et contre-pressions exercées sur la ou les surfaces d'actionnement du piston 6.

Lorsque le piston 6 est entraîné sous l'effet d'un déplacement d'un volume d'huile hydraulique V_{1H} sous pression, une première partie du piston 6 comportant une section d'entrée subit une pression d'entrée du volume d'huile hydraulique ayant pour conséquence le déplacement du piston 6. Une deuxième partie 60 du piston comportant une section de sortie est alors entraînée vers un volume d'azote liquide N₂ à forte vitesse.

La vitesse de déplacement du piston 6 dépend du débit d'entrée de l'huile hydraulique selon que l'on procède à une cryogénisation, un pompage d'un volume d'azote liquide N₂ ou encore un repositionnement du piston 6 après un premier déplacement lors du premier mode de fonctionnement.

Le rapport de section du piston 6 est avantageusement conçu pour fournir une pression de sortie suffisante afin de favoriser une cryogénisation de l'échantillon dans un temps très court, par exemple, dans un laps de temps inférieur ou égal à 10 ms, préférentiellement inférieur ou égal à 5 ms. Selon un mode de réalisation, la cryogénisation est réalisée dans un délai sensiblement voisin de 1 ms. Dans l'exemple de la figure 3, l'extrémité de la deuxième partie 60 du piston 6 comporte un élément distal 61 permettant de prélever un volume d'azote liquide N₂. Lorsque la pression de l'huile hydraulique à l'entrée du piston 6 est contrôlée, ce dernier est déplacé de sorte à pénétrer dans le réservoir intermédiaire 50 comportant un volume d'azote liquide N₂. Lorsque l'extrémité 61 est déplacée dans son trajet retour vers la partie supérieure du vérin 55, un volume d'azote liquide N₂ a été prélevé. Le prélèvement de ce volume peut se faire par aspiration dans le canal dans lequel la deuxième partie 60 du piston 6 évolue. L'élément distal 61 joue un rôle d'extracteur d'un volume d'azote liquide N₂. Différents modes de réalisation peuvent être envisagés pour prélever un volume d'azote liquide N₂ selon le principe d'une seringue, d'une pipette ou tout autre principe permettant de prélever un volume d'azote liquide N_{2.} L'opération est ainsi répétée jusqu'à obtenir un volume souhaité d'azote liquide N₂ qui sera ensuite utilisé pour cryogéniser l'échantillon 8. Selon un mode de réalisation, le canal dans lequel évolue la deuxième partie 60 du piston 6 constitue une chambre 51 qui peut être dimensionnée pour accueillir un volume total d'azote liquide N₂ prédéfini selon le besoin de cryogénisation.

Bien que divers modes de réalisation aient été décrits et illustrés, la description détaillée ci-dessus ne doit pas être considérée comme étant limitée à ces derniers. Diverses modifications peuvent être apportées aux modes de réalisation par l'homme du métier tels que définis par les revendications.

## Revendications

1. Dispositif de cryogénisation ou de vitrification (1), comprenant :
- un accumulateur (2) comportant un premier volume d'huile hydraulique (V_{1H}) sous pression ;
- un système de commande pilotant une vanne (20) apte à libérer un deuxième volume d'huile hydraulique (V_{2H}) de l'accumulateur vers un vérin (55) au moyen d'une conduite (4) ;
- un vérin (55) comportant un piston (6) configuré pour être entraîné par le deuxième volume d'huile hydraulique (V_{2H}) et entraîner un premier volume de fluide cryogénisant (V_{1A}) dans une enceinte de cryogénisation (7) destinée à recevoir un échantillon (8) à cryogéniser.

2. Dispositif selon la revendication **1,** dans lequel l'accumulateur (2) comprend un premier volume d'huile hydraulique (V_{1H}) sous une pression supérieure ou égale à 200 bars, ladite pression étant appliquée au piston (6) de sorte à générer une pression de sortie sur le premier volume de fluide cryogénisant (V_{1A}) supérieure ou égale à 1800 bars dans une durée inférieure ou égale à 5 ms.

3. Dispositif selon la revendication **1,** dans lequel l'accumulateur (2) comprend un premier volume d'huile hydraulique (V_{1H}) sous une pression supérieure ou égale à 200 bars, ladite pression étant appliquée au piston (6) de sorte à générer une pression de sortie sur le premier volume de fluide cryogénisant (V_{1A}) supérieure ou égale à 2000 bars dans une durée inférieure ou égale à 2 ms.

4. Dispositif selon l'une quelconque des revendications **1** à **3,** dans lequel l'accumulateur (2) comporte une chambre de volume déformable, dans laquelle un volume de gaz compressible assure une pression prédéfinie sur le premier volume d'huile hydraulique de l'accumulateur (2).

5. Dispositif selon l'une quelconque des revendications **1** à **4,** dans lequel le piston (6) a une géométrie assurant un rapport de pressions entre son entrée et sa sortie supérieur ou égal à 6.

6. Dispositif selon l'une quelconque des revendications **1** à **5,** comprenant un bloc de distribution (3), ledit bloc de distribution (3) acheminant le premier volume d'huile hydraulique (V_{1H}) sous pression vers le vérin (55), ledit bloc de distribution (3) comportant un premier distributeur (10) permettant d'activer une vanne de tir (35) selon une première pression donnée lorsqu'une cryogénisation est activée.

7. Dispositif selon la revendication **6,** dans lequel le bloc de distribution (3) comporte un deuxième distributeur (11) piloté pour prélever un deuxième volume de fluide cryogénisant (V_{2A}), le système de commande pilotant le deuxième distributeur (11) pour actionner le piston (6) selon un régime permettant de pomper ledit deuxième volume de fluide cryogénisant (V_{2A}).

8. Dispositif selon la revendication **7,** dans lequel le deuxième distributeur (11) coordonne l'échappement d'un volume d'huile hydraulique provenant du vérin (55) consécutivement à une cryogénisation de l'échantillon (8).

9. Dispositif selon l'une quelconque des revendications **6** à **8,** dans lequel l'interface de sortie (19) de l'accumulateur (2) acheminant un volume d'huile hydraulique sous pression est alignée avec l'interface d'entrée (22) du bloc de distribution (3), lesdites interfaces étant reliées par une conduite (21) dont la longueur est inférieure ou égale à 60 cm.

10. Dispositif selon l'une quelconque des revendications **6** à **9,** dans lequel l'interface de sortie (30) du bloc de distribution (3) acheminant un volume d'huile hydraulique sous pression est alignée avec l'interface d'entrée (41) du vérin (55), lesdites interfaces (30, 41) étant reliées par une conduite (4) dont la longueur est inférieure ou égale à 60 cm.

11. Dispositif selon l'une quelconque des revendications **1** à **10,** dans lequel le piston (6) comporte un élément extrémal (61) configuré pour prélever un volume de fluide cryogénisant dans une chambre intermédiaire (50).

12. Dispositif selon l'une quelconque des revendications **1** à **11,** dans lequel un réservoir (12) de fluide cryogénisant assure le maintien d'un volume de fluide cryogénisant dans une chambre intermédiaire (50).

13. Dispositif selon l'une quelconque des revendications **1** à **12,** dans lequel l'enceinte de cryogénisation (7) comporte un volume d'éthanol.

14. Dispositif selon l'une quelconque des revendications **1** à **13,** dans lequel l'enceinte de cryogénisation (7) comporte une ouverture d'évacuation pour l'échappement, notamment du fluide de cryogénisation.

## Patentansprüche

1. Kryokonservierungs- oder Versiegelungsvorrichtung (1), umfassend:
- einen Speicher (2), der ein erstes Hydraulikölvolumen (V_{1H}) unter Druck beinhaltet;
- ein Steuerungssystem, das ein Ventil (20) ansteuert, das imstande ist, ein zweites Hydraulikölvolumen (V_{2H}) aus dem Speicher anhand einer Leitung (4) zu einem Zylinder (55) freizugeben;
- einen Zylinder (55), der einen Kolben (6) beinhaltet, der konfiguriert ist, um durch das zweite Hydraulikölvolumen (V_{2H}) angetrieben zu werden, und ein erstes Kryofluidvolumen (V_{1A}) in einem Kryobehälter (7) anzutreiben, der dazu bestimmt ist, eine zu kryogenisierende Probe (8) zu empfangen.

2. Vorrichtung nach Anspruch 1, wobei der Speicher (2) ein erstes Hydraulikölvolumen (V_{1H}) unter Druck von größer oder gleich 200 bar umfasst, wobei der Druck derart an den Kolben (6) angelegt wird, um einen Ausgangsdruck auf das erste Kryofluidvolumen (V_{1A}), der größer oder gleich 1800 bar ist, für eine Dauer von kleiner oder gleich 5 ms zu erzeugen.

3. Vorrichtung nach Anspruch 1, wobei der Speicher (2) ein erstes Hydraulikölvolumen (V_{1H}) unter Druck von größer oder gleich 200 bar umfasst, wobei der Druck derart an den Kolben (6) angelegt wird, um einen Ausgangsdruck auf das erste Kryofluidvolumen (V_{1A}), der größer oder gleich 2000 bar ist, für eine Dauer von kleiner oder gleich 2 ms zu erzeugen.

4. Vorrichtung nach einem der Ansprüche 1 bis 3, wobei der Speicher (2) eine Kammer mit verformbarem Volumen beinhaltet, in der ein verdichtbares Gasvolumen für einen vordefinierten Druck auf das erste Hydraulikölvolumen des Speichers (2) sorgt.

5. Vorrichtung nach einem der Ansprüche 1 bis 4, wobei der Kolben (6) eine Geometrie aufweist, die für ein Druckverhältnis zwischen seinem Eintritt und seinem Austritt größer oder gleich 6 sorgt.

6. Vorrichtung nach einem der Ansprüche 1 bis 5, einen Verteilungsblock (3) umfassend, wobei der Verteilungsblock (3) das erste Hydraulikölvolumen (V_{1H}) unter Druck an den Zylinder (55) heranführt, wobei der Verteilungsblock (3) einen ersten Verteiler (10) beinhaltet, der es ermöglicht, ein Schussventil (35) entsprechend einem ersten gegebenen Druck zu aktivieren, wenn eine Kryokonservierung aktiviert ist.

7. Vorrichtung nach Anspruch 6, wobei der Verteilungsblock (3) einen zweiten Verteiler (11) beinhaltet, der angesteuert wird, um ein zweites Kryofluidvolumen (V_{2A}) zu entnehmen, wobei das Steuerungssystem den zweiten Verteiler (11) ansteuert, um den Kolben (6) entsprechend einer Betriebsform zu betätigen, die es ermöglicht, das zweite Kryofluidvolumen (V_{2A}) abzupumpen.

8. Vorrichtung nach Anspruch 7, wobei der zweite Verteiler (11) den Ausstoß eines Hydraulikölvolumens koordiniert, das von dem Zylinder (55) nach einer Kryokonservierung der Probe (8) kommt.

9. Vorrichtung nach einem der Ansprüche 6 bis 8, wobei die Austrittsschnittstelle (19) des Speichers (2), die ein Hydraulikölvolumen unter Druck heranführt, mit der Eintrittsschnittstelle (22) des Verteilungsblocks (3) ausgerichtet ist, wobei die Schnittstellen durch eine Leitung (21) verbunden sind, deren Länge kleiner oder gleich 60 cm ist.

10. Vorrichtung nach einem der Ansprüche 6 bis 9, wobei die Austrittsschnittstelle (30) des Verteilungsblocks (3), der ein Hydraulikölvolumen unter Druck heranführt, mit der Eintrittsschnittstelle (41) des Zylinders (55) ausgerichtet ist, wobei die Schnittstellen (30, 41) durch eine Leitung (4) verbunden sind, deren Länge kleiner oder gleich 60 cm ist.

11. Vorrichtung nach einem der Ansprüche 1 bis 10, wobei der Kolben (6) ein Abschlusselement (61) beinhaltet, das konfiguriert ist, um ein Kryofluidvolumen in einer Zwischenkammer (50) zu entnehmen.

12. Vorrichtung nach einem der Ansprüche 1 bis 11, wobei ein Tank (12) eines Kryofluids für die Beibehaltung eines Kryofluidvolumens in einer Zwischenkammer (50) sorgt.

13. Vorrichtung nach einem der Ansprüche 1 bis 12, wobei der Kryobehälter (7) ein Ethanol-Volumen beinhaltet.

14. Vorrichtung nach einem der Ansprüche 1 bis 13, wobei der Kryobehälter (7) eine Austragsöffnung für den Ausstoß, insbesondere des Kryofluids beinhaltet.

## Claims

1. Cryogenic preservation or vitrification device (1), comprising:
- an accumulator (2) including a first volume of pressurised hydraulic oil (V_{1H});
- a control system controlling a valve (20) capable of releasing a second volume of hydraulic oil (V_{2H}) from the accumulator toward a cylinder (55) by means of a pipe (4);
- a cylinder (55) including a piston (6) configured to be driven by the second volume of hydraulic oil (V_{2H}) and to drive a first volume of cryogenic fluid (V_{1A}) in a cryogenic vessel (7) intended to receive a sample (8) to be cryogenically preserved.

2. Device according to claim **1,** wherein the accumulator (2) comprises a first volume of hydraulic oil (V_{1H}) subjected to a pressure of greater than or equal to 200 bar, said pressure being applied to the piston (6) so as to generate an outlet pressure exerted on the first volume of cryogenic fluid (V_{1A}) of greater than or equal to 1800 bar in a period of time of less than or equal to 5 ms.

3. Device according to claim **1,** wherein the accumulator (2) comprises a first volume of hydraulic oil (V_{1H}) subjected to a pressure of greater than or equal to 200 bar, said pressure being applied to the piston (6) so as to generate an outlet pressure exerted on the first volume of cryogenic fluid (V_{1A}) of greater than or equal to 2000 bar in a period of time of less than or equal to 2 ms.

4. Device according to any one of claims **1** to **3,** wherein the accumulator (2) includes a chamber, the volume whereof is deformable, wherein a volume of compressible gas produces a predefined pressure to which the first volume of hydraulic oil of the accumulator (2) is subjected.

5. Device according to any one of claims **1** to **4,** wherein the geometrical configuration of the piston (6) ensures a pressure ratio between the inlet thereof and the outlet thereof that is greater than or equal to 6.

6. Device according to any one of claims **1** to **5,** comprising a distribution block (3), said distribution block (3) conveying the first volume of pressurised hydraulic oil (V_{1H}) to the cylinder (55), said distribution block (3) including a first distributor (10) allowing a blasting valve (35) to be activated according to a first given pressure when cryogenic preservation is activated.

7. Device according to claim **6,** wherein the distribution block (3) includes a second distributor (11) controlled so as to collect a second volume of cryogenic fluid (V_{2A}), the control system controlling the second distributor (11) so as to actuate the piston (6) according to a regime allowing said second volume of cryogenic fluid (V_{2A}) to be pumped.

8. Device according to claim **7,** wherein the second distributor (11) coordinates the evacuation of a volume of hydraulic oil originating from the cylinder (55) consecutively to cryogenic preservation of the sample (8).

9. Device according to any one of claims **6** to **8,** wherein the outlet interface (19) of the accumulator (2) conveying a volume of pressurised hydraulic oil is aligned with the inlet interface (22) of the distribution block (3), said interfaces being connected by a pipe (21), the length whereof is less than or equal to 60 cm.

10. Device according to any one of claims **6** to **9,** wherein the outlet interface (30) of the distribution block (3) conveying a volume of pressurised hydraulic oil is aligned with the inlet interface (41) of the cylinder (55), said interfaces (30, 41) being connected by a pipe (4), the length whereof is less than or equal to 60 cm.

11. Device according to any one of claims **1** to **10,** wherein the piston (6) includes an end element (61) configured for collecting a volume of cryogenic fluid in an intermediate chamber (50).

12. Device according to any one of claims **1** to **11,** wherein a cryogenic fluid reservoir (12) ensures that a volume of cryogenic fluid is maintained in an intermediate chamber (50).

13. Device according to any one of claims **1** to **12,** wherein the cryogenic vessel (7) contains a volume of ethanol.

14. Device according to any one of claims **1** to **13,** wherein the cryogenic vessel (7) includes a discharge opening for the evacuation, in particular, of the cryogenic fluid.
